# EUROPEAN PATENT APPLICATION

(11) **EP 4 488 739 A1**
(43) Date of publication of application: **08.01.2025**
(21) Application number: 23902312.0
(22) Date of filing: 30.10.2023
(51) Int. Cl.: G02B 15/173, G02B 21/24

(54) **CONTINUOUS ZOOM SYSTEM FOR SURGICAL MICROSCOPE, AND SURGICAL MICROSCOPE**

(30) Priority: 12.12.2022 CN 202211587619
(71) Applicant: Towardpi (Beijing) Medical Technology Ltd., Beijing 102206 (CN)
(72) Inventor: LU, Lirong, Beijing 102206 (CN); WANG, Xiao, Beijing 102206 (CN)
(74) Representative: Murgitroyd & Company
(86) International application number: PCT/CN2023/127522
(87) International publication number: WO 2024/125112

(57) **Abstract**

Disclosed herein are a surgical microscope continuous zoom system and a surgical microscope. The continuous zoom system can be applied to a surgical microscope comprising a zoom cam (1). The continuous zoom system (2) includes: a front fixed lens set (21), a zoom lens set (22), a compensation lens set (23), a first rear fixed lens set (24) and a second rear fixed lens set (25) arranged sequentially along a main optical axis; the zoom lens set (22) and the compensation lens set (23) are configured, as driven by the zoom cam (1), to move simultaneously along the main optical axis between the front fixed lens set (21) and the first rear fixed lens set (24), to cause a system focal length value to change continuously and linearly; the zoom cam (1) comprises a first cam curve and a second cam curve; the first cam curve and the second cam curve are both exponential curves; the zoom lens set (22) moves following the first cam curve, and the compensation lens set (23) moves following the second cam curve.

## Description

The present disclosure claims the priority from the CN patent application No. 202211587619.8 filed with the China National Intellectual Property Administration (CNIPA) on December 12, 2022, the contents of which are hereby incorporated by reference in their entirety.

### TECHNICAL FIELD

The present disclosure relates to the field of optical technologies and surgical microscopes, for example, to a surgical microscope continuous zoom system and a surgical microscope, which are applicable to ophthalmic surgery.

### BACKGROUND

The surgical microscope continuous zoom system is a crucial part of an optical system for the surgical microscope, which is responsible for the continuous zoom function of the surgical microscope system. An unreasonable design for motion curves of the zoom lens set and the compensation lens set in the continuous zoom system may result in discontinuous zoom of the surgical microscope, which in turn causes discontinuities in field of view as the field of view in the object plane is changed, further bringing discomfort to the observer. Alternatively, an unreasonable design for motion curves of the zoom lens set and the compensation lens set in the continuous zoom system may increase the difficulty in mechanical design of surgical microscopes and further result in a substandard mechanical design, which in turn may cause mechanical jamming upon zooming.

### SUMMARY

In a first aspect of the present disclosure, there is provided a surgical microscope continuous zoom system, which can be applied to a surgical microscope comprising a zoom cam, the continuous zoom system comprising: a front fixed lens set, a zoom lens set, a compensation lens set, a first rear fixed lens set and a second rear fixed lens set arranged sequentially along a main optical axis;
wherein the zoom lens set and the compensation lens set are configured, as driven by the zoom cam, to move simultaneously along the main optical axis between the front fixed lens set and the first rear fixed lens set, to cause a system focal length value to change continuously and linearly; and
wherein the zoom cam comprises a first cam curve and a second cam curve; the first cam curve and the second cam curve are both exponential curves; the zoom lens set moves following the first cam curve, and the compensation lens set moves following the second cam curve.

In a second aspect of the present disclosure, there is provided a surgical microscope, comprising a zoom cam and a surgical microscope continuous zoom system according to the first aspect of the present disclosure; wherein the zoom cam comprises a first cam curve and a second cam curve.

### BRIEF DESCRIPTION OF THE DRAWINGS

Fig. 1 is a schematic diagram of a surgical microscope continuous zoom system and a zoom cam provided by embodiments of the present disclosure;
Fig. 2A is a schematic diagram of an optical structure of a surgical microscope continuous zoom system provided by embodiments of the present disclosure;
Fig. 2B is a schematic diagram of an optical structure of a further surgical microscope continuous zoom system provided by embodiments of the present disclosure;
Fig. 3 is a schematic diagram of an optical structure of a surgical microscope continuous zoom system provided by embodiments of the present disclosure, respectively in a large, a medium and a small field of view;
Fig. 4 is a curve chart of a cam provided by embodiments of the present disclosure;
Fig. 5 is a focal length variation curve chart of a system provided by embodiments of the present disclosure;
Fig. 6 is a distorted grid chart provided by embodiments of the present disclosure in a case of a small field of view;
Fig. 7 is a distorted grid chart provided by embodiments of the present disclosure in a case of a large field of view; and
Fig. 8 is a chart of resolutions for different frequency bands provided by embodiments of the present disclosure in a high-magnification imaging case.

The reference signs employed therein are listed below:
1 - zoom cam; 2 - continuous zoom system; 21 - front fixed lens set; 22 - zoom lens set; 23 - compensation lens set; 24 - first rear fixed lens set; 25 - second rear fixed lens set; 211 - first lens; 212 - second lens; 221 - third lens; 222 - fourth lens; 231 - fifth lens; 232 - sixth lens; 241 - seventh lens; 242 - eighth lens.

### DETAILED DESCRIPTION OF EMBODIMENTS

Reference will now be made to the drawings to describe example embodiments of the present disclosure, where components irrelevant to the description of the example embodiments are omitted.

As used herein, the term such as "include," "comprise" or the like indicates presence of features, components, parts or a combination thereof disclosed in the Description, not excluding a possibility of presence or addition of one or more other features, components, parts or a combination thereof.

Hereinafter, the present disclosure will be detailed with reference to the drawings and in conjunction with the embodiments.

According to the embodiments of the present disclosure, there is provided a surgical microscope. The surgical microscope includes an ophthalmic surgical microscope.

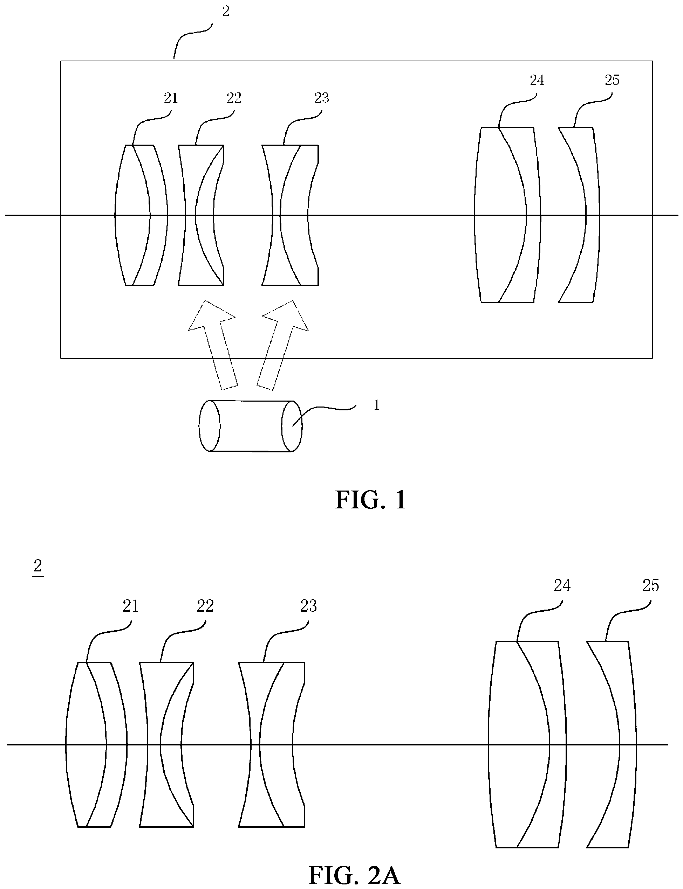

Fig. 1 is a schematic diagram of a surgical microscope continuous zoom system and a zoom cam provided by embodiments of the present disclosure.

As shown therein, the surgical microscope includes: a zoom cam 1 and a surgical microscope continuous zoom system 2.

The zoom cam 1 is of a cylindrical structure, and has a first cam curve and a second cam curve. The first cam curve and the second cam curve are both exponential curves, and are engraved in the form of grooves on the outer wall of the cylindrical body of the zoom cam 1.

The surgical microscope continuous zoom system 2 includes a front fixed lens set 21, a zoom lens set 22, a compensation lens set 32, a first rear fixed lens set 24 and a second rear fixed lens set 25 are arranged sequentially along a main optical axis from an image side to an object side.

When the zoom cam 1 is rotating, it can drive the zoom lens set 22 and the compensation lens set 23 to simultaneously move along the main optical axis between the front fixed lens set 21 and the first rear fixed lens set 24, to cause the focal length of the system to change linearly and continuously. The zoom lens set 22 moves following the first cam curve, and the compensation lens set 23 moves following the second cam curve. The first cam curve and the second cam curve on the zoom cam 1 are obtained by simulating the optical structure and optical parameters of the surgical microscope continuous zoom system 2.

According to embodiments of the present disclosure, since the first cam curve and the second cam curve are smooth exponential curves, the difficulty in mechanical design of the zoom cam 1 is lowered. By applying the zoom cam 1 having such cam curves to a surgical microscope, the surgical microscope can be prevented from being mechanically stuck during continuous zooming due to defective mechanical designs of the zoom cam 1.

In this way, it is only necessary for the zoom cam 1 cooperating with the surgical microscope continuous zoom system 2 to achieve afocal continuous zoom of the surgical microscope system, thereby realizing continuous changes in the field of view of the object plane. This not only ensures that users (such as ophthalmic surgeons) will not feel uncomfortable due to the jumping of the object plane field of view, but also reduces the mechanical design difficulty of the zoom cam 1 and eliminates the mechanical stuck caused by mechanical designs of the zoom cam 1.

The optical structure and the optical parameters of the surgical microscope continuous zoom system 2 will be detailed with reference to the following embodiments, which are omitted herein for brevity.

According to the embodiments of the present disclosure, there is further provided a surgical microscope continuous zoom system. The surgical microscope continuous zoom system can be applied to the surgical microscope described above.

Fig. 2A is a schematic diagram of an optical structure of a surgical microscope continuous zoom system provided by embodiments of the present disclosure.

As shown therein, the surgical microscope continuous zoom system 2 can be applied to the surgical microscope including the zoom cam 1. The continuous zoom system 2 includes: a front fixed lens set 21, a zoom lens set 22, a compensation lens set 23, a first rear fixed lens set 24 and a second rear fixed lens set 25 arranged sequentially along the main optical axis from the image side to the object side.

As driven by the zoom cam 1, the zoom lens set 22 and the compensation lens set 23 can move along the main optical axis between the front fixed lens set 21 and the first rear fixed lens set 24, to cause the focal length of the system to change linearly and continuously. By way of example, as driven by the zoom cam 1, the zoom lens set 22 and the compensation lens set 23 can move simultaneously in the same direction along the main optical axis.

The zoom cam 1 has a first cam curve and a second cam curve; the first cam curve and the second cam curve are both exponential curves; the zoom lens set 22 moves following the first cam curve, and the compensation lens set 23 moves following the second cam curve.

The zoom cam 1 in these embodiments is identical to the counterpart in the embodiments described above, and details thereof are omitted therein for brevity.

According to the embodiments of the present disclosure, an observed object plane (e.g. a human eye retinal plane) is located on the object-side focal plane of the objective lens. Beams from the observed object plane become parallel beams after passing through the objective lens. The parallel beams are still kept in parallel after passing through the continuous zoom system 2. Then, the parallel beams are converged to the image-side focal plane of the eyepiece set by an auxiliary lens set (e.g. a beam splitter, a lens set and an eyepiece set in the lens tube, or the like) disposed on the image side of the continuous zoom system 2, to enable an observer to observe a microscope image of the observed object plane.

In this way, when the surgical microscope is continuously zoomed through the continuous zoom system 2, the focal length value of the surgical microscope system is changed linearly and continuously. Accordingly, the field of view of the observed object plane must be changed linearly and continuously, i.e., no discontinuity occurs in the field of view of the observed object plane, thus eliminating the discomfort for the observer (e.g. a surgeon) caused by discontinuities in field of view. Since the first cam curve and the second cam are designed as smooth exponential curves, the difficulty in mechanical design of the zoom cam 1 is lowered. By applying such zoom cam 1 to a surgical microscope, the surgical microscope can be prevented from being mechanically stuck during continuous zooming due to defective mechanical designs of the zoom cam 1.

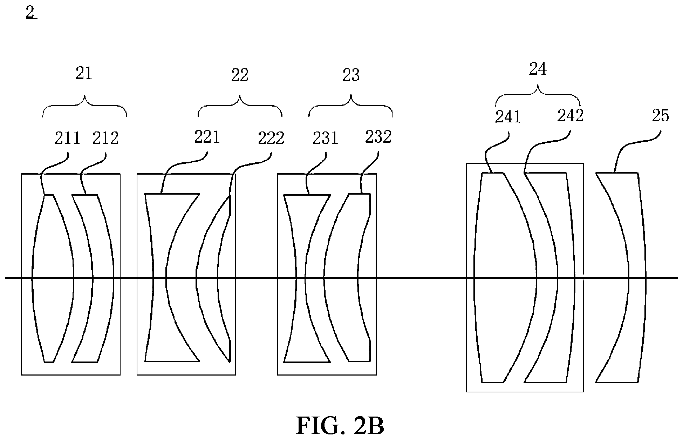

According to the embodiments of the present disclosure, as shown in Figs. 2A and 2B, the front fixed lens set 21 is a double cemented lens including a first lens 211 and a second lens 212, where the first lens 211 and the second lens 212 are arranged sequentially long the main optical axis from the image side to the object side; the focal length value of the system is positively correlated with a center distance from the compensation lens set 23 to the second lens 212 in the front fixed lens set 21.

According to the embodiments of the present disclosure, the focal length value of the system is positively correlated with a center distance from the center of the compensation lens set 23 to the center of the second lens 212 in the front fixed lens set 21. In this way, it can be guaranteed that the focal length value of the surgical microscope system is changed linearly and continuously, such that the field of view of the observed object plane can be changed linearly and continuously.

By way of example, the equation for describing that the system focal length value is changed with the movement of the zoom lens set 22 and the compensation lens set 23 can be expressed as follows: f(x)=-92.32x-326.4, where x is a center distance from the center of the compensation lens set 23 to the center of the second lens 212 in the front fixed lens set 21, and f(x) is a focal length value of the system. When the surgical microscope system is zoomed, the focal length value f(x) of the system tends to infinity. In the case, the surgical microscope continuous zoom system is also referred to as surgical microscope afocal continuous zoom system.

According to the embodiments of the present disclosure, the surface of the first lens 211 facing the image side is a convex surface, and the surface of the first lens 211 facing the object side is also a convex surface. The surface of the second lens 212 facing the image side is a concave surface, and the surface of the second lens 212 facing the object side is a convex surface.

According to the embodiments of the present disclosure, as shown in Figs. 2A and 2B, the zoom lens set 22, the compensation lens set 23 and the first rear fixed lens set 24 are all double cemented lenses; the second rear fixed lens set 25 is a single meniscus lens.

According to the embodiments of the present disclosure, the continuous zoom system 2 of the surgical microscope is provided therein with two rear fixed lens sets, namely a first rear fixed lens set 24 and a second rear fixed lens set 25, where the first rear fixed lens set 24 is a double cemented lens, and the second rear fixed lens set 25 is a single meniscus lens.

In this way, a second rear fixed lens set 25 of a single meniscus lens structure is added on the basis of the first rear fixed lens set 24, where the concave surface of the single meniscus lens faces the image side, and the convex surface thereof faces the object side. In the case, the beams from the objective lens of the surgical microscope can be converged while the spherical aberration of the microscope imaging optical path can be reduced, to thus decrease the sizes of the Numerical Apertures (NAs) of the continuous zoom system 2 and the auxiliary lens set (e.g. a lens set in the lens tube, or the like). Therefore, while guaranteeing the continuous zoom of the surgical microscope, these embodiments can cause the volume of the whole surgical microscope to be decreased and reduce the surgical space occupied by the surgical microscope, which is beneficial for the surgical space layout and the surgical operation.

According to the embodiments of the present disclosure, as shown in Fig. 2B, the zoom lens set 22 is a double cemented lens including a third lens 221 and a fourth lens 222, the compensation lens set 23 is a double cemented lens including a fifth lens 231 and a sixth lens 232, and a first rear fixed lens set 24 is a double cemented lens including a seventh lens 241 and an eighth lens 242; the first lens 211 through the eighth lens 242 are arranged sequentially along the main optical axis from the image side to the object side; the first lens 211, the third lens 221 and the fifth lens 231 are all formed of optical glass H-FK61; the second lens 212 formed of optical glass H-ZBAF20; the fourth lens 222 is formed of optical glass H-LAf3B; the sixth lens 232 is formed of optical glass H-ZF5; the seventh lens 241 is formed of optical glass H-QK3L; and the eighth lens 242 is formed of optical glass H-BAF2.

According to the embodiments of the present disclosure, the first lens 211 through the eighth lens 242 are all double spherical lenses. The surface of the first lens 211 facing the image side is a convex surface, and the surface thereof facing the object side is also a convex surface. The surface of second lens 212 facing the image side is a concave surface, and the surface thereof facing the object side is a convex surface. The surface of the third lens 221 facing the image side is a concave surface, and the surface thereof facing the object side is a concave surface. The surface of the fourth lens 222 facing the image side is a convex surface, and the surface thereof facing the object side is a concave surface. The surface of the fifth lens 231 facing the image side is a concave surface, and the surface thereof facing the object side is a concave surface. The surface of the sixth lens 232 facing the image side is a convex side, and the surface thereof facing the object side is a concave side. The surface of the seventh lens 241 facing the image side is a convex surface, and the surface thereof facing the object side is a convex surface. The surface of the eighth lens 242 facing the image side is a concave surface, and the surface thereof acing the object side is a convex surface.

In this way, since the front fixed lens set 21, the zoom lens set 22, the compensation set 23 and the first rear fixed lens set 24 in the continuous zoom system 2 are all designed as double cemented lenses, the embodiments can eliminate the reflection loss on both surfaces of the lens and prevent total internal reflection on the air gap, thus correcting off-axis image quality and axial chromatic aberration. Moreover, with the optical glass materials as described above for those double cemented glasses (i.e., the optical glass materials of those double cemented lenses all have a combination of a high refractive index and a low Abbe constant, or a combination of a low refractive index and a high Abbe constant), the embodiments can also accomplish the purpose of eliminating the chromatic aberration while guaranteeing the image quality of the microscope. As compared with the related technologies, these embodiments can improve the effect of eliminating the chromatic aberration.

In other words, according to the embodiments of the present disclosure, the front fixed lens set 21, the zoom lens set 22, the compensation lens set 23 and the first rear fixed lens set 24 in the continuous zoom system 2 are all designed as double cemented lenses, and meanwhile, these double cemented lenses are all formed of the optical glass materials describe above. As such, double guarantees can be provided for eliminating the chromatic aberration and improving the imaging quality of the microscope.

In this way, by improving the effect of eliminating the chromatic aberration, the imaging resolution can be improved, such that a surgeon can acquire clear images with less color distortion during surgery, thus improving the surgical safety.

According to the embodiments of the present disclosure, the refractive indexes and Abbe constants of the optical glass materials described above will be presented below in Table 1.

**Table 1 Refractive index and Abbe constant of optical glass material**

| Optical glass material | Refractive index | Abbe constant |
|---|---|---|
| H-FK61 | 1.496998115 | 81.59468721 |
| H-ZBAF20 | 1.70154522 | 41.14084822 |
| H-LAF3B | 1.744003562 | 44.90420717 |
| H-ZF5 | 1.740005486 | 28.291496 |
| H-QK3L | 1.487490803 | 70.41964002 |
| H-BAF2 | 1.569701918 | 49.44823157 |

According to the embodiments of the present disclosure, the focal length of the first lens 211 has a positive value, and the focal length of the second lens 212 has a negative value; the focal lengths of the third lens 221 and the fourth lens 222 have a negative value, respectively; the focal lengths of the fifth lens 231 and the sixth lens 232 have a negative value, respectively; and the focal length of the seventh lens 241 has a positive value, and the focal length of the eighth lens 242 has a negative value.

According to the embodiments of the present disclosure, the focal length of the front fixed lens set 21 has a positive value; the focal lengths of the zoom lens set 22 and the compensation lens set 23 have a negative value, respectively; and the focal lengths of the first rear fixed lens set 24 and second rear fixed lens set 25 have a positive value, respectively.

In other words, the front fixed lens set 21 has a positive focal power, which is formed by cementing the first lens 211 with a positive focal power and a second lens 212 with a negative focal power. The zoom lens set 22 has a negative focal power, which is formed by cementing the third lens 221 with a negative focal power and the fourth lens 222 with a negative focal power. The compensation lens set 23 has a negative focal power, which is formed by cementing the fifth lens 231 with a negative focal power and the sixth lens 232 with a positive focal power. The first rear fixed lens set 24 has a positive focal power, which is formed by cementing the seventh lens 241 with a positive focal power and the eighth lens 242 with a negative focal power. In this way, a continuous zoom system 2 in the "positive-negative-positive" five-element pattern can be obtained.

According to the embodiments of the present disclosure, the focal length of the zoom lens set 22 is M times greater than the focal length of the compensation lens set 23, where M is greater than 1; and/or the focal length of the front fixed lens set 21 is N times greater than the combined focal length of the first rear fixed lens set 24 and the second rear fixed lens set 25, where N is less than 1. By way of example, M is a value greater than 1 and less than 2, for example, M=1.2; and N=0.8.

By way of example, referring to Figs. 2A and 2B, the curvature radii and center thicknesses of different lenses in the continuous zoom system 2 will be presented below in Table 2.

**Table 2 Curvature radii and center thicknesses of different lenses in continuous zoom system 2**

| Surface | Curvature radius | Center thickness | Optical glass material |
|---|---|---|---|
| 1 | 168.226 | 3.18 | H-FK61 |
| 2 | -15.310 | 2.20 | H-ZBAF20 |
| 3 | -27.091 | 1.02 | / |
| 4 | -56.083 | 1.20 | H-FK61 |
| 5 | 11.575 | 2.21 | H-LAF3B |
| 6 | 18.685 | 7.97 | / |
| 7 | -23.561 | 1.20 | H-FK61 |
| 8 | 18.305 | 2.20 | H-ZFS |
| 9 | 29.385 | 34.50 | / |
| 10 | 58.955 | 6.66 | H-FK61 |
| 11 | -14.995 | 2.20 | H-QK3L |
| 12 | -19.763 | 2.98 | / |
| 13 | -18.763 | 2.20 | H-BAF2 |
| 14 | -34.262 | 22.71 | / |

As shown in Fig. 2A, the lens surfaces from left to right in the continuous zoom system 2 are sequentially Surface 1, Surface 2 ... Surface 14.

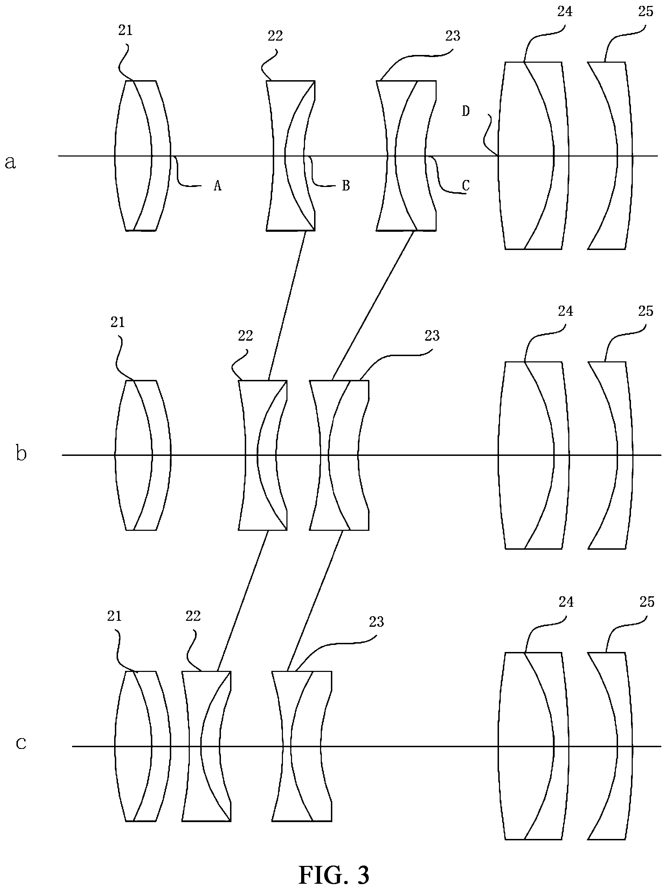

By way of example, as shown in Fig. 3, a, b and c sequentially correspond to optical structures of the surgical microscope continuous zoom system 2 according to these embodiments, respectively in a large, a medium and a small field of view. Referring to Fig. 3, the change of the air gap between the zoom lens set 22 and the compensation lens set 23 will be presented below in Table 3.

**Table 3 Change of the air gap between the zoom lens set 22 and the compensation lens set 23**

| Surface | Air gap value 1 (c optical structure in Fig. 3) | Air gap value 2 (b optical structure in Fig. 3) | Air gap value 3 (a optical structure in Fig. 3) |
|---|---|---|---|
| Thickness 3 | 1.021 | 17.974 | 22.623 |
| Thickness 6 | 7.975 | 2.188 | 19.465 |
| Thickness 9 | 34.496 | 23.330 | 1.404 |

As shown in Fig. 3, Thickness 3 is a gap between A and B; Thickness 6 is a gap between B and C; and Thickness 9 is a gap between C and D.

In Fig. 3, when the zoom lens set 22 and the compensation lens set 23 are moved simultaneously along the main optical axis, Thickness 3, Thickness 6 and Thickness 9 are changed simultaneously, so as to implement the function of continuously changing the field of view and altering the zoom ratio. According to the embodiments of the present disclosure, for example, the zoom ratio of the continuous ratio system 2 may be up to 1:6, the change range of the field of view may be from 0° to 7.4°, and the change range of the entrance pupil diameter may be from 3.4mm to 18mm.

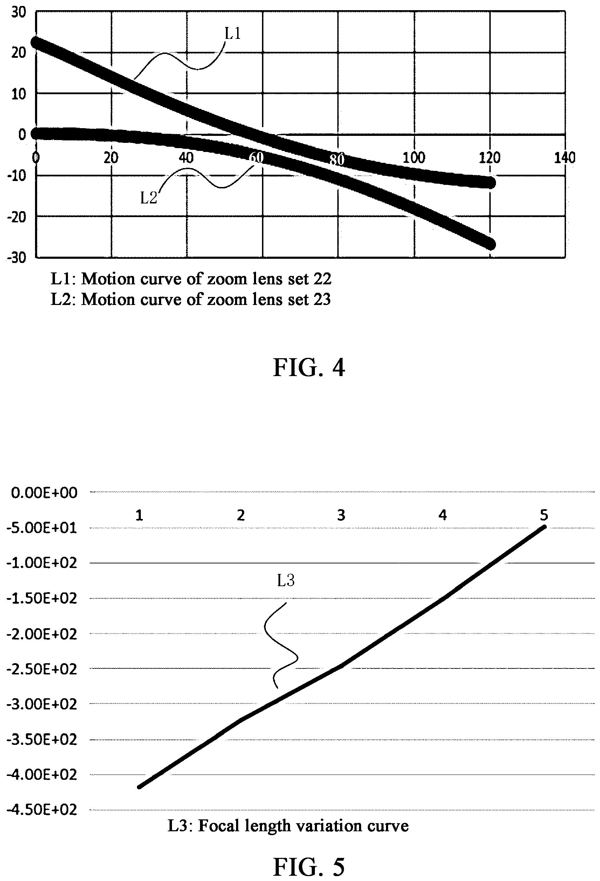

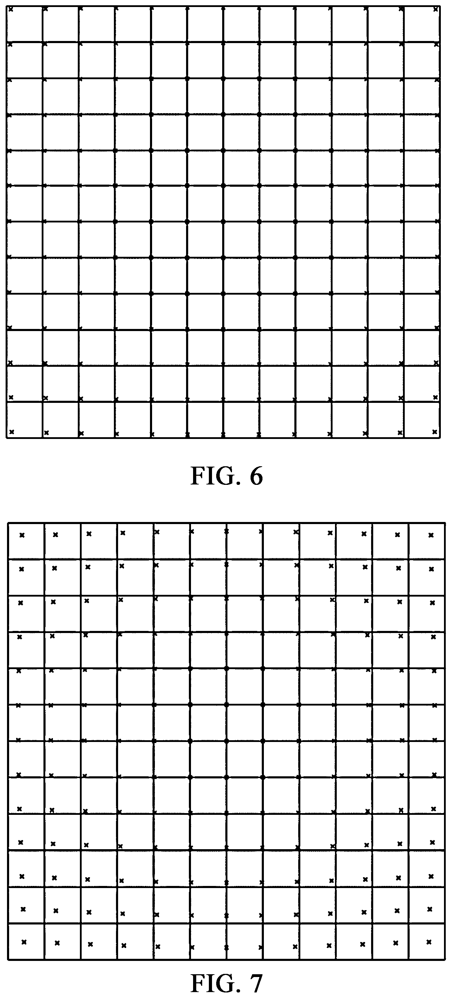

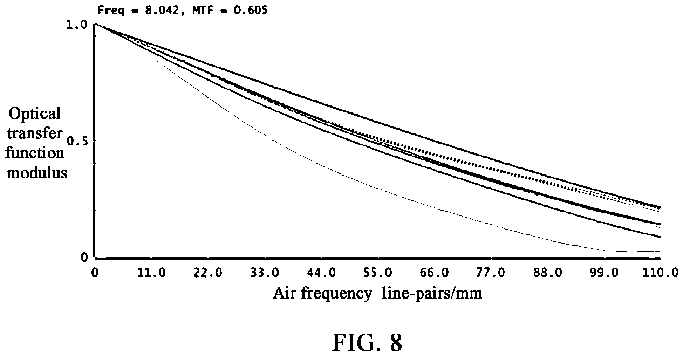

In Fig. 4, the simulation curve L1 and the simulation curve L2 represent the first cam curve and the second cam curve in the surgical microscope continuous zoom system 2 according to these embodiments, respectively, i.e., the simulation curve L1 is a motion curve of the zoom lens set 22, the simulation curve L2 is a motion curve of the compensation lens set 23; both of the cam curves are smooth exponential curves. In Fig. 5, the simulation curve L3 is a focal length value variation curve of the continuous zoom system 2 according to the embodiments, which is very close to a straight line, and the focal length value according to the embodiments is changed almost linearly. Fig. 6 is a distorted grid chart provided by embodiments of the present disclosure in a case of a small field of view; and Fig. 7 is a distorted grid chart provided by embodiments of the present disclosure in a case of a large field of view. It could be learned therefrom that the imaging distortion is small in a case of a small field of view while large in a case of a large field of view, according to these embodiments. Fig. 8 is a chart of resolutions for different frequency bands provided by embodiments of the present disclosure in a high-magnification imaging case. As could be seen therefrom, in these embodiments, the resolution for different colored light can reach 110 line-pairs/mm when the optical transfer function modulus is 0.2.

## Claims

1. A surgical microscope continuous zoom system, which can be applied to a surgical microscope comprising a zoom cam (1), the continuous zoom system (2) comprising: a front fixed lens set (21), a zoom lens set (22), a compensation lens set (23), a first rear fixed lens set (24) and a second rear fixed lens set (25) arranged sequentially along a main optical axis;
wherein the zoom lens set (22) and the compensation lens set (23) are configured, as driven by the zoom cam (1), to move simultaneously along the main optical axis between the front fixed lens set (21) and the first rear fixed lens set (24), to cause a system focal length value to change continuously and linearly;
wherein the zoom cam (1) comprises a first cam curve and a second cam curve; the first cam curve and the second cam curve are both exponential curves; the zoom lens set (22) moves following the first cam curve, and the compensation lens set (23) moves following the second cam curve.

2. The surgical microscope continuous zoom system of claim 1, wherein the front fixed lens set (21) is a double cemented lens comprising a first lens (211) and a second lens (212) arranged sequentially along the main optical axis from an image side to an object side; the system focal length value is positively correlated with a center distance from the compensation lens set (23) to the second lens (212) in the front fixed lens set (21).

3. The surgical microscope continuous zoom system of claim 2, wherein the zoom lens set (22), the compensation lens set (23) and the first rear fixed lens set (24) are all double cemented lenses; the second rear fixed lens set (25) is a single meniscus lens.

4. The surgical microscope continuous zoom system of claim 3, wherein the zoom lens set (22) is a double cemented lens comprising a third lens (221) and a fourth lens (222), the compensation lens set (23) is a double cemented lens comprising a fifth lens (231) and a sixth lens (232), and the first rear fixed lens set (24) is a double cemented lens comprising a seventh lens (241) and an eighth lens (242); the first lens (211) through the eighth lens (242) are arranged sequentially along the main optical axis from the image side to the object side; the first lens (211), the third lens (221) and the fifth lens (231) are all formed of optical glass H-FK61; the second lens (212) is formed of optical glass H-ZBAF20; the fourth lens (222) is formed of optical glass H-LAF3B; the sixth lens (232) is formed of optical glass H-ZF5; the seventh lens (241) is formed of optical glass H-QK3L; and the eighth lens (242) is formed of optical glass H-BAF2.

5. The surgical microscope continuous zoom system of claim 4, wherein the first lens (211) through the eighth lens (242) are all double spherical lenses.

6. The surgical microscope continuous zoom system of claim 4, wherein a focal length of the first length (211) has a positive value, and a focal length of the second lens (212) has a negative value; focal lengths of the third lens (221) and the fourth lens (222) have a negative value, respectively; focal lengths of the fifth lens (231) and the sixth lens (232) have a negative value, respectively; a focal length of the seventh lens (241) has a positive value, and a focal length of the eighth lens (242) has a negative value.

7. The surgical microscope continuous zoom system of claim 1, wherein a focal length of the front fixed lens set (21) has a positive value; focal lengths of the zoom lens set (22) and the compensation lens set (23) have a negative value, respectively; focal lengths of the first rear fixed lens set (24) and the second rear fixed lens set (25) have a positive value, respectively.

8. The surgical microscope continuous zoom system of claim 1, wherein the zoom lens set (22) and the compensation lens set (23) are configured, as driven by the zoom cam (1), to move simultaneously along the main optical axis in the same direction.

9. The surgical microscope continuous zoom system of claim 1, wherein at least one of the following is met: a focal length of the zoom lens set (22) is M times greater than a focal length of the compensation lens set (23), M being greater than 1; and a focal length of the front fixed lens set (21) is N times greater than a combined focal length of the first rear fixed lens set (24) and the second rear fixed lens set (25), N being less than 1.

10. A surgical microscope, comprising: a zoom cam (1), and the surgical microscope continuous zoom system (2) of any of claims 1-9, wherein the zoom cam (1) comprises a first cam curve and a second cam curve.
